# FASCICULE DE BREVET EUROPEEN

(11) **EP 2 029 263 B1**
(45) Date de publication et mention de la délivrance du brevet: **15.09.2010**
(21) Numéro de dépôt: 07766011.6
(22) Date de dépôt: 09.05.2007
(51) Int. Cl.: B01D 61/50, B01D 63/08

(54) **DISPOSITIF D'ECHANGE PAR MEMBRANE, NOTAMMENT ELECTRODIALYSEUR, A AU MOINS DEUX COMPARTIMENTS**
MEMBRANAUSTAUSCHVORRICHTUNG, ELEKTRODIALYSATOR MIT MINDESTENS ZWEI KAMMERN
MEMBRANE EXCHANGE DEVICE, AN ELECTRODIALYSER, WITH AT LEAST TWO COMPARTMENTS

(30) Priorité: 09.05.2006 FR 0604089
(43) Date de publication de la demande: 04.03.2009
(73) Titulaire: Eurodia Industrie, 91320 Wissous (FR)
(72) Inventeur: GUERIF, Gérard, F-84240 La Motte D'aigues (FR)
(74) Mandataire: Hennion, Jean-Claude
(86) Numéro de dépôt international: PCT/FR2007/051231
(87) Numéro de publication internationale: WO 2007/128940

(56) Documents cités:
- DE-U1- 9 000 872
- FR-A- 1 270 379
- FR-A1- 2 642 985
- FR-A1- 2 855 071

## Description

La présente invention concerne l'échange entre au moins deux liquides d'éléments contenus dans au moins l'un de ceux-ci par une technique mettant en oeuvre des membranes, notamment échangeuses d'ions, techniques du type dialyse, électrodialyse, osmose inverse ou ultrafiltration.

Elle concerne plus particulièrement un dispositif à au moins deux compartiments dans lequel chaque compartiment définit un circuit pour un liquide donné et comprend un empilement de membranes et de cadres séparateurs.

Dans les techniques d'échange par membranes, on réalise un empilement en superposant alternativement une membrane et un cadre séparateur. Chaque cadre séparateur est composé d'une pièce rigide et imperméable aux liquides dont la partie centrale est évidée et garnie d'une structure ajourée, par exemple une grille ou toile. La pièce rigide, appelée plan de joint, assure l'étanchéité du dispositif d'échange. Tous les plans de joint des cadres séparateurs et toutes les membranes d'un circuit donné sont percés des mêmes orifices d'écoulement qui, dans l'empilement, forment les conduites d'alimentation et d'évacuation du liquide correspondant audit circuit.

Tous les plans de joint des cadres séparateurs d'un circuit donné sont pourvus des mêmes canaux de distribution qui relient les orifices d'écoulement à la partie centrale évidée.

Chaque zone ou cellule d'échange est constituée par l'empilement d'une première membrane échangeuse, perméable à certains éléments, d'un cadre séparateur et d'une seconde membrane échangeuse, perméable aux mêmes ou à d'autres éléments.

Dans la technique d'électrodialyse, le dispositif comporte deux électrodes d'extrémité et, entre les deux dites électrodes, un certain nombre de cellules d'électrodialyse identiques, chaque cellule étant constituée de deux ou de plusieurs compartiments, chaque compartiment étant délimité entre deux membranes sélectivement perméables aux ions.

Dans les dispositifs industriels d'échange, le nombre de cellules d'échange superposées peut être très important, de l'ordre voire supérieur à 700. De ce fait, pour des raisons d'hydrodynamique et pour minimiser les consommations énergétiques, on met en oeuvre des membranes et des cadres séparateurs qui soient d'épaisseur réduite. Ceci est encore plus nécessaire dans le cas d'un électrodialyseur de manière à limiter la distance séparant les deux électrodes d'extrémité, réduisant de ce fait la résistance électrique globale du dispositif.

Les cadres séparateurs ont habituellement une épaisseur de quelques centaines de microns, généralement inférieure à 1mm. Quant aux membranes, leur épaisseur est généralement inférieure à 0,2mm. Par contre, on cherche à ce que, dans une cellule d'échange, la surface d'échange proprement dite, c'est-à-dire la surface de la partie centrale évidée dans laquelle circule le liquide, soit la plus importante possible. Cette surface d'échange peut être supérieure au mètre carré.

Dans toutes les techniques d'échange par membranes, il importe que la distribution du liquide dans la cellule d'échange soit la plus homogène possible, d'une part, de manière à avoir un échange parfaitement contrôlé et, d'autre part, pour éviter les disparités de perte de charges entre les différentes cellules, disparités qui seraient susceptibles de provoquer des variations de pression sur les membranes, avec les risques de déformation, de fuite, voire de rupture qui pourraient en résulter.

Les différences de perte de charges peuvent avoir d'autres causes qu'une distribution qui ne serait pas parfaitement homogène. Elles peuvent notamment provenir des différences existant entre les liquides circulant dans deux compartiments différents, s'agissant notamment de la viscosité ou du débit. De ce fait, les dispositifs d'échange actuels sont limités dans leurs possibilités de fonctionnement du fait de la contrainte imposée par la nécessité de maintenir entre les différentes cellules d'échange un équilibre de pression, évitant les risques de déformation des membranes, génératrices de fuite voire de rupture.

Le but de la présente invention est de pallier cet inconvénient, en offrant à l'utilisateur du dispositif d'échange des possibilités nouvelles de fonctionnement.

Ce but est parfaitement atteint par un dispositif d'échange par membranes, notamment mais non exclusivement un électrodialyseur, à au moins deux compartiments, dans lequel, de manière connue :
a) chaque compartiment définit un circuit pour un liquide donné et comprend un empilement de membranes et de cadres séparateurs,
b) chaque cadre séparateur est constitué d'une pièce rigide, dénommée plan de joint, comportant une partie centrale qui est évidée et garnie d'une structure ajourée,
c) tous les plans de joint des cadres séparateurs et toutes les membranes d'un circuit donné sont percés des mêmes orifices d'écoulement qui, dans l'empilement, forment les conduits d'alimentation et d'évacuation du liquide correspondant,
d) tous les plans de joint des cadres séparateurs d'un circuit donné sont pourvus des mêmes canaux de distribution, reliant les orifices d'écoulement à la partie centrale évidée.

De manière caractéristique, selon la présente invention, les plans de joint d'un compartiment donné ont une épaisseur supérieure à celle des plans de joint du ou des autres compartiments. De plus, la section de passage des canaux de distribution dudit compartiment donné est supérieure à celle des canaux de distribution du ou des autres compartiments.

Etant donné que l'épaisseur du plan de joint correspond sensiblement à l'épaisseur de la cellule d'échange, la disposition particulière de la présente invention permet de faire varier cette épaisseur, d'un compartiment à l'autre, en fonction des paramètres relatifs au liquide circulant dans ladite cellule d'échange, que ce soit en terme de viscosité ou de débit et en conséquence, de régler le temps de séjour ou de résidence du liquide à l'intérieur de la cellule d'échange.

L'épaisseur des plans de joint et la section de passage des canaux de distribution sont déterminées, pour chaque compartiment, en sorte que la pression au niveau des membranes, due à la perte de charge engendrée par la circulation du liquide, est sensiblement la même dans chaque compartiment.

On réalise ainsi un équilibre optimal de pression sur toute la hauteur de l'empilement.

Dans une variante de réalisation, d'un dispositif d'échange par membrane à deux compartiments, les épaisseurs des plans de joint du premier et du second compartiment sont dans un rapport de l'ordre de 2 à 5.

Dans un mode de réalisation non exhaustif, les plans de joint du premier compartiment ont une épaisseur de l'ordre de 2,1 mm et les plans de joint du second compartiment une épaisseur de l'ordre de 0,6 mm.

Pour obtenir un plan de joint de plus grande épaisseur, il est bien sûr possible de former le cadre séparateur selon la technique habituelle, notamment telle que décrite dans le document FR 2.662.114.

Il est également possible de former un plan de joint de plus grande épaisseur en réalisant la superposition de plusieurs plans de joint ou équivalents de plus faible épaisseur.

Selon un mode de réalisation, le plan de joint de plus grande épaisseur est constitué par la superposition de trois plans de joint de plus faible épaisseur, parmi lesquels le plan de joint central est exempt de canaux de distribution.

Dans ce mode de réalisation, l'épaisseur de la cellule d'échange correspond à la hauteur des trois plans de joint superposés de plus faible épaisseur, tandis que la section de passage des canaux de distribution correspond à la somme des sections de passage des deux plans de joint extérieurs.

De préférence, dans ce cas, le plan de joint central de plus faible épaisseur est garni d'une toile soudée tandis que les deux plans de joint extérieurs de plus faible épaisseur sont garnis d'une toile, non soudée, rapportée dans la partie centrale évidée.

C'est la toile soudée du plan de joint central de plus faible épaisseur qui assure la cohésion de ce plan de joint de plus grande épaisseur.

La présente invention a également pour objet l'utilisation du dispositif d'échange tel que caractérisé ci-dessus pour le traitement d'au moins deux liquides circulant avec des débits différents.

La présente invention a également pour objet l'utilisation du dispositif d'échange tel que caractérisé ci-dessus pour le traitement d'au moins deux liquides ayant des viscosités différentes.

S'agissant du traitement d'au moins deux liquides circulant à des débits différents, la présente invention a également pour objet l'utilisation dudit dispositif pour le traitement par électrodialyse d'un premier et d'un second liquides, le premier liquide ayant une conductivité électrique supérieure à celle du second liquide et le débit du premier liquide dans le premier circuit étant inférieur à celui du second liquide dans le second circuit.

Ainsi, le premier liquide, à conductivité plus élevée, circule plus lentement dans la cellule d'échange et a donc un temps de séjour ou de résidence plus élevé, tandis que le second liquide de plus faible conductivité circule plus rapidement dans la cellule d'échange, ayant un temps de résidence plus faible.

Dans cette variante de réalisation, de préférence, les conductivités électriques du premier et du second liquides sont dans un rapport de l'ordre de 4 à 12 et les débits du premier et du second liquides sont respectivement dans un rapport de l'ordre de 0,5 à 0,1, de préférence de 0,2 à 0,1.

La présente invention sera mieux comprise à la lecture de la description qui va être faite d'un exemple de réalisation d'un électrodialyseur à deux compartiments dont les cadres séparateurs ont des épaisseurs différentes d'un compartiment à l'autre et dont les canaux de distribution des plans de joint ont des sections de passage différentes d'un compartiment à l'autre, illustrée par le dessin dans lequel :
- la figure 1 est une vue très schématique en perspective de l'empilement de trois membranes et de deux cadres séparateurs d'épaisseurs différentes, dissociés les uns des autres,
- la figure 2 est une vue schématique en plan d'un premier cadre séparateur,
- la figure 3 est une vue schématique partielle en plan d'un second cadre séparateur de plus grande épaisseur,
- la figure 4 est une vue schématique en perspective d'un second exemple de l'empilement de membranes et de cadres séparateurs d'électrodialyseur, dans lequel les plans de joint de plus grande épaisseur sont constitués par la superposition de trois plans de joint de plus faible épaisseur, dont le plan de joint central est dépourvue de canaux de distribution.

Le dispositif d'échange qui est pris à titre d'exemple non exhaustif pour la présente description est un électrodialyseur 1, dont la particularité est de comporter deux électrodes d'extrémité 2,3 entre lesquelles passe un courant électrique qui favorise l'échange des éléments, à l'état ionique.

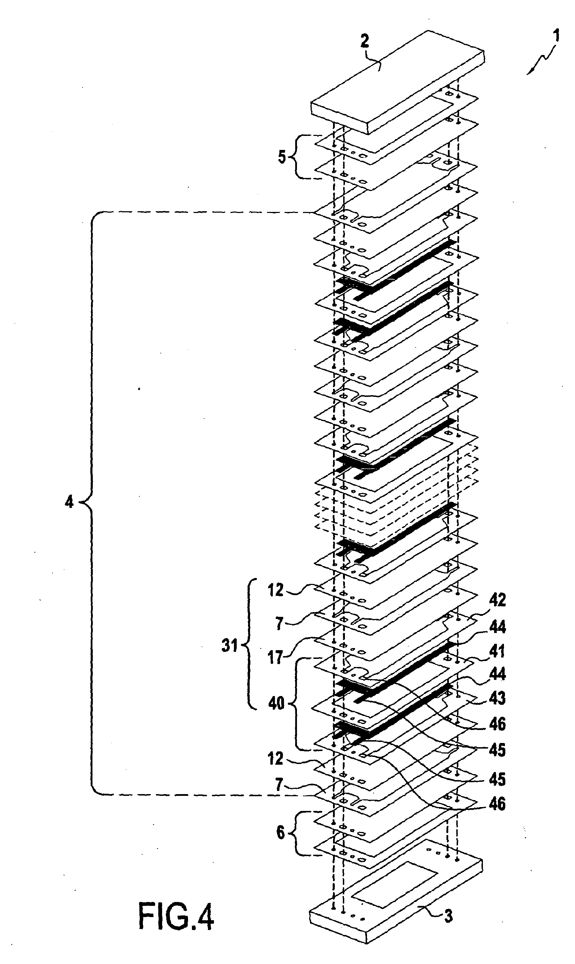

Sur la figure 4 sont représentés très schématiquement les organes principaux de l'électrodialyseur 1, dissociés les un des autres pour une meilleure compréhension. La structure générale de cet électrodialyseur 1 est conventionnelle, avec - entre les deux électrodes d'extrémité 2,3 - un empilement de membranes et de cadres séparateurs. Dans cet exemple, l'électrodialyseur 1 comporte deux compartiments, le premier compartiment définissant un premier circuit pour un premier liquide et le second compartiment définissant un second circuit pour un second liquide. Ceci n'est bien sûr pas limitatif, il pourrait comporter trois voire quatre compartiments.

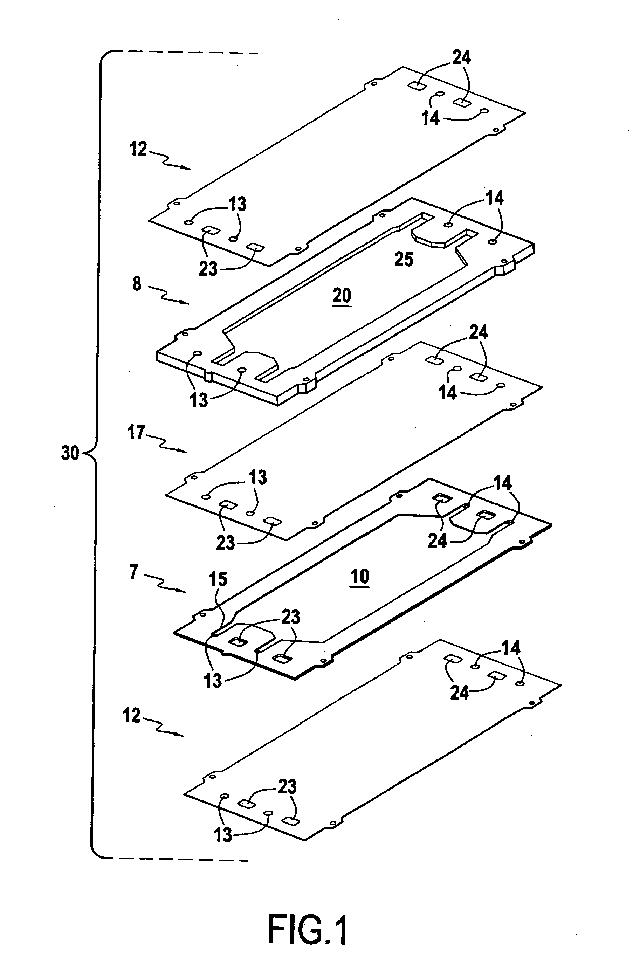

Un ensemble de cadres et de membranes d'extrémité 5,6 de structure particulière est prévu à proximité immédiate de chaque électrode 2,3. Entre ces deux ensembles 5,6 se trouve l'empilement 4 de toutes les cellules actives, dont une partie est représentée sur la figure 1, chaque cellule active d'échange étant délimitée par l'espace de circulation du liquide entre deux membranes adjacentes 12 séparées par un cadre séparateur.

Dans l'électrodialyseur 1 à deux compartiments, il y a donc, en référence à la figure 1, des premiers cadres séparateurs 7 qui délimitent les cellules actives du premier compartiment et des seconds cadres séparateurs 8 qui délimitent les cellules actives du second compartiment.

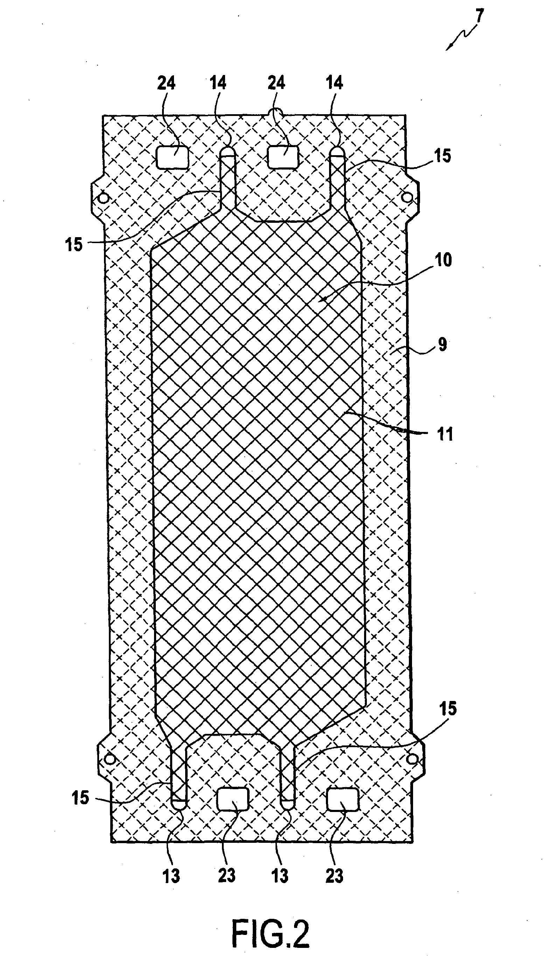

Sur la figure 2 est représenté un premier cadre séparateur 7. Il est constitué d'un plan de joint 9, pièce rigide de configuration rectangulaire qui comporte une partie centrale évidée 10, et d'une structure ajourée 11 garnissant ladite partie centrale 10, par exemple une toile ou une grille. Cette structure ajourée 11 apparaît sur la figure 2 en pointillée dans le plan de joint 9 du fait qu'elle est insérée par thermo-soudage dans ledit plan de joint.

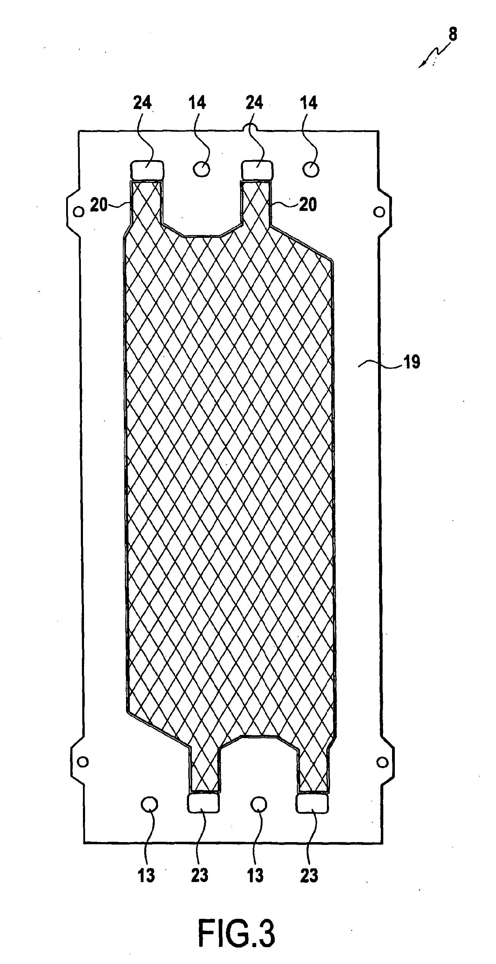

Sur la figure 3 est représenté un second cadre séparateur 8, qui est constitué d'un plan de joint 19, pièce rigide de configuration rectangulaire, comportant une partie centrale évidée, garnie d'une structure ajourée. Sur la figure 3, la structure ajourée 20 n'apparaît que dans la partie centrale évidée, mais elle peut aussi, comme pour le premier cadre 7, être intégrée au plan de joint 19.

Tous les plans de joint 7,8 et toutes les membranes 12 du premier et du second circuits possèdent les mêmes orifices d'écoulement 13,14,23,24 qui, dans l'empilement 4, forment les conduits d'alimentation et les conduits d'évacuation des deux liquides, les orifices d'écoulement 13,14 du premier circuit étant bien sûr positionnés différemment de ceux 23,24 du second circuit.

Tous les plans de joints 9 des premiers cadres séparateurs 7 du premier circuit sont pourvus des mêmes canaux de distribution 15, reliant les orifices d'écoulement 13,14 du premier liquide à la partie centrale évidée 10, les orifices d'écoulement 23,24 du second liquide n'étant pas, dans les plans de joint 9 des premiers cadres séparateurs 7, reliés à la partie centrale évidée 10. Il en est de même pour les plans de joint 19 des seconds cadres séparateurs 8 du second circuit, dans lesquels seuls les orifices d'écoulement 23,24 du second liquide sont reliés à la partie centrale évidée par les canaux de distribution 25.

Les canaux de distribution 15,25 peuvent être des parties évidées garnies de structure ajourée, comme dans le présent exemple illustré, de préférence munies de diffuseurs ou distributeurs, consistant par exemple dans une structure ajourée plus épaisse ou un maillage plus dense. Il peut aussi s'agir de canaux de distribution, intégrés dans l'épaisseur du plan de joint, comme décrit dans le document FR-2.867.694.

Dans l'empilement, on retrouve la succession des motifs 30 suivants (figure 1) : première membrane 12/ premier cadre séparateur 7/ seconde membrane 17/second cadre séparateur 8.

De manière particulière, les épaisseurs des plans de joint 9,19 respectivement des premiers 7 et des seconds 8 cadres séparateurs sont différentes et les sections de passage des canaux de distribution 15,25 et bien sûr des orifices d'écoulement 23,24 respectivement des premiers 7 et seconds 8 cadres séparateurs sont différentes, cette seconde différence étant dans le même sens que la première.

Les épaisseurs des plans de joint 9 ,19, des premier 7 et second 8 cadres séparateurs sont de préférence dans un rapport de l'ordre de 2 à 5. Dans un exemple précis de réalisation, l'épaisseur des plans de joint 9 du premier cadre séparateur 7 est de l'ordre de 0,6 mm tandis que celle des plans de joint 19 du second cadre séparateur 8 est de l'ordre de 2,1 mm.

La différence d'épaisseur entre les plans de joint des cadres séparateurs des différents circuits permet d'alimenter lesdits circuits avec des liquides s'écoulant avec des débits différents tout en restant dans une plage de perte de charges acceptable.

Certes, dans les électrodialyseurs conventionnels, il est possible de faire s'écouler les liquides avec des débits différents mais, dans ce cas, il faut nécessairement faire varier la pression des pompes d'alimentation, ce qui induit des différences de pression au niveau des membranes des différentes cellules actives. Une telle différence de pression n'est pas acceptable dans la mesure où elle peut provoquer une déformation des membranes, des fuites voire même des ruptures rédhibitoires.

Ainsi, selon la présente invention, l'épaisseur des plans de joint 9,19 et la section de passage des canaux de distribution 15,25 sont déterminées, pour chaque compartiment, en sorte que la pression au niveau des membranes, due à la perte de charges engendrée par la circulation du liquide, est sensiblement la même dans chaque compartiment. On obtient ainsi un fonctionnement optimal sans risque d'altération des membranes due à une éventuelle déformation.

Le premier circuit correspondant au premier cadre séparateur 7 est alimenté avec un débit faible, qui est ajusté pour permettre de créer une perte de charges identique à celle générée dans le second circuit correspondant au second cadre séparateur 8 qui lui est alimenté avec un débit nettement supérieur.

Cette différence d'épaisseur et de section de passage, caractéristique de la présente invention, peut également être mise à profit dans le cadre de liquides ayant des viscosités différentes. Dans ce cas, c'est le liquide de plus faible viscosité qui est véhiculé dans le premier circuit et c'est le liquide de plus forte viscosité qui est véhiculé dans le second circuit.

Lorsque le dispositif d'échange est un électrodialyseur comme dans l'exemple actuellement décrit, un autre intérêt de la présente invention est de pouvoir adapter l'électrodialyseur pour tenir compte des différences de conductivité électrique entre les liquides. Par exemple, le premier circuit, dans les premiers cadres séparateurs 7 qui ont une faible épaisseur, sera de préférence alimenté avec un premier liquide présentant une conductivité moyenne très élevée, notamment de 80 à 240 mS/cm, dont on souhaite qu'il ait un temps de résidence élevé dans la cellule d'électrodialyse, tandis que le second circuit dont les cadres séparateurs 8 ont une épaisseur supérieure à celle du premier circuit sera alimenté par un second liquide de conductivité moyenne, notamment 20 mS/cm, de manière à ce que le temps de résidence de ce second liquide soit réduit pour ne pas avoir de forte variation de composition entre l'entrée et la sortie de l'empilement.

Les différences de sections des canaux de distribution qu'il est possible d'obtenir grâce à la différence d'épaisseur des cadres séparateurs et aussi à la différence de largeur des canaux de distribution permettent de minimiser les fuites électriques dans le premier circuit, dans lequel circule le liquide à plus forte conductivité électrique. Ceci est un avantage important dans la mesure où ces fuites électriques, d'une part, font chuter le rendement de production de l'électrodialyseur et, d'autre part, sont responsables d'échauffement pouvant conduire à une destruction rapide des cadres séparateurs et des membranes.

Dans l'exemple illustré aux figures 2 et 3, les canaux de distribution 15 des premiers cadres 7 ont une largeur beaucoup plus petite et une longueur plus grande que celles des canaux de distribution 20 des seconds cadres 8. Ceci augmente la résistance électrique.

Dans l'exemple de la figure 1, les seconds cadres séparateurs 8 ne diffèrent des premiers cadres séparateurs 7, quant à leur fabrication, que par l'épaisseur des plans de joint. Ils peuvent tout particulièrement être réalisés selon la technique développée dans les documents FR-2.637.817. Selon cette technique, la structure ajourée est intégrée dans la fabrication du plan de joint. Par exemple, le cadre séparateur est composé de quatre feuilles thermoplastiques et de la structure ajourée, les deux feuilles extérieures étant souples et les deux feuilles intérieures situées de part et d'autre de la structure ajourée étant semi-rigides, pour au moins l'une d'elles, ne comportant pas d'évidement dans la zone des diffuseurs, faisant office de canaux de distribution. Les quatre feuilles sont assemblées selon le plan de joint de telle sorte que, dans les zones correspondant aux diffuseurs, la ou les feuilles semi-rigides ne sont plus assemblées à la structure ajourée et forment des éléments de protection, empêchant la déformation de la membrane.

Ainsi, dans ce premier exemple de réalisation, l'utilisateur doit nécessairement posséder des cadres séparateurs de différentes épaisseurs.

Le second exemple de réalisation qui est illustré à la figure 4 diffère du premier exemple en ce que les plans de joint de plus grande épaisseur des seconds cadres séparateurs ne sont pas monoblocs mais constistués par la superposition de plusieurs plans de joint. Cette disposition particulière permet à l'utilisateur qui ne disposerait pas de cadres séparateurs dont le plan de joint a l'épaisseur requise, d'en constituer à partir des plans de joint en sa possession.

Dans le mode de réalisation qui est illustré à la figure 4, le second cadre séparateur 40, dont le plan de joint total fait une épaisseur de 2,1 mm, est composé des pièces suivantes :
- un cadre séparateur central 41 dont le plan de joint a une épaisseur de 0,6 mm et qui comporte une toile soudée dans le plan de joint. Ce cadre central 41 ne comporte pas de distributeur ;
- deux plans de joint extérieurs 42,43, disposés de part et d'autre du cadre central 41, ayant chacun une épaisseur de 0,75 mm. Ces plans de joint extérieurs 42,43 peuvent être constitués par un joint, par exemple EPDM. Dans l'espace intérieur délimité par chacun des deux plans de joint extérieurs 42,43, est disposée une toile 44, faisant 0,75 mm d'épaisseur. De plus, des éléments de protection 45 sont disposés au droit des canaux de distribution 46 formés dans les deux plans de joint extérieurs 42,43.

L'ensemble de ces différentes pièces permet de réaliser un second cadre séparateur 40 d'épaisseur 2,1 mm, possédant une bonne stabilité mécanique donnée par le cadre central 41 et sa toile intégrée.

Dans l'électrodialyseur, le motif récurrent 31 est donc constitué d'une première membrane 12, d'un premier cadre séparateur 7, d'une seconde membrane 17 et d'un second cadre séparateur 40, résultant de la superposition des pièces décrites ci-dessus (figure 4).

Bien sûr, cet exemple est donné à titre indicatif, mettant en oeuvre les éléments relativement standards possédés par les utilisateurs d'électrodialyseurs.

Dans le mode de réalisation décrit ci-dessus, avec des premiers plans de joint de 0,6 mm et des seconds plans de joint de 2,1 mm, c'est la même structure ajourée qui a été mise en oeuvre. Cependant il peut être opportun de faire varier également l'ouverture de la structure ajourée c'est-à-dire la taille des mailles de la grille ; en effet plus les mailles sont fermées et plus la perte de charge procurée est élevée et inversement. Il est donc possible d'intervenir non seulement sur les différences d'épaisseur et sur les différences de section de passage des canaux de distribution mais également sur les différences d'ouverture des structures ajourées, dans chaque compartiment, pour obtenir sensiblement la même perte de charge au niveau des membranes, dans tous les compartiments. Grâce à cette disposition particulière, il devient possible de diminuer la différence d'épaisseur des plans de joint dans un rapport qui peut par exemple être de 1,2 à 2.

A titre indicatif, dans un autre mode de réalisation, d'un électrodyaliseur à deux compartiments, le second compartiment était équipé de plans de joint ayant une épaisseur de 0,75mm, une structure ajourée très ouverte et des canaux de distribution ayant une section très large, ce qui a permis de véhiculer un fluide relativement visqueux sous une faible perte de charge tout en présentant un temps de résidence court. S'agissant du premier compartiment, l'épaisseur du plan de joint, l'ouverture de la structure ajourée et la section des canaux de distribution étaient similaires à celles du premier cadre séparateur de l'exemple décrit précédemment. Dans ce compartiment, il s'est agi d'alimenter un liquide à débit faible, de l'ordre de 20 fois inférieur à celui du second compartiment, tout en générant une perte de charge identique.

## Revendications

1. Dispositif d'échange par membrane, notamment électrodialyseur, à au moins deux compartiments, dans lequel :
e) chaque compartiment définit un circuit pour un liquide donné et comprend un empilement de membranes (12, 17) et de cadres séparateurs (7, 8),
f) chaque cadre séparateur (7, 8) est constitué d'une pièce rigide, dénommée plan de joint (9, 19), comportant une partie centrale qui est évidée (10) et garnie d'une structure ajourée (11, 20),
g) tous les plans de joint (9, 19) des cadres séparateurs (7, 8) et toutes les membranes (12, 17) d'un circuit donné sont percés des mêmes orifices d'écoulement (13, 14, 23, 24) qui, dans l'empilement, forment les conduits d'alimentation et d'évacuation du liquide correspondant,
h) tous les plans de joint des (9, 19) cadres séparateurs (7, 8) d'un circuit donné sont pourvus des mêmes canaux de distribution (15, 25) reliant les orifices d'écoulement à la partie centrale évidée,
**caractérisé en ce que** les plans de joint d'un compartiment donné ont une épaisseur supérieure à celle des plans de joint du ou des autres compartiments et **en ce que** la section de passage des canaux de distribution dudit compartiment donné est supérieure à celle des canaux de distribution du ou des autres compartiments.

2. Dispositif selon la revendication 1 **caractérisé en ce que** l'épaisseur des plans de joint (9, 19), la section de passage des canaux de distribution (15, 25) et éventuellement l'ouverture de la structure ajourée sont déterminées, pour chaque compartiment, en sorte que la perte de charge au niveau des membranes (12, 17), due à la circulation du liquide, est sensiblement la même dans chaque compartiment.

3. Dispositif selon l'une des revendications 1 ou 2, à deux compartiments, **caractérisé en ce que** les épaisseurs des plans de joint (9, 19) du second et du premier compartiment sont dans un rapport de l'ordre de 2 à 5.

4. Dispositif selon la revendication 3 **caractérisé en ce que** les plans de joint (19) du second compartiment ont une épaisseur de l'ordre de 2,1 mm et les plans de joint (9) du premier compartiment une épaisseur de l'ordre de 0,6 mm.

5. Dispositif selon l'une des revendications 1 à 4 **caractérisé en ce que** les plans de joint de plus grande épaisseur sont constitués par la superposition de plans de joint de plus faible épaisseur, par exemple trois plans de joint dont le plan de joint central est exempt de canaux de distribution.

6. Dispositif selon la revendication 5 **caractérisé en ce que**, dans la superposition, le plan de joint central est garni d'une toile soudée tandis que les deux plans de joint extérieurs sont garnis d'une toile, non soudée, rapportée dans la partie centrale évidée.

7. Dispositif selon l'une des revendications 1 ou 2 **caractérisé en ce que** les épaisseurs des plans de joint du second et premier compartiments sont dans un rapport de 1,2 à 2 et **en ce que** la structure ajourée des plans de joint du second compartiment est plus ouverte que celle des plans de joint du premier compartiment.

8. Utilisation du dispositif selon l'une des revendications 1 à 7 pour le traitement d'au moins deux liquides à des débits différents.

9. Utilisation du dispositif selon l'une des revendications 1 à 7 pour le traitement d'au moins deux liquides de différentes viscosités.

10. Utilisation selon la revendication 8 pour le traitement par électrodialyse d'un second et un premier liquides, le second liquide ayant une conductivité électrique supérieure à celle du premier liquide et le débit du second liquide dans le second circuit étant inférieur à celui du premier liquide dans le premier circuit.

11. Utilisation selon la revendication 10 **caractérisée en ce que** les conductivités électriques du second et du premier liquides sont dans un rapport de l'ordre de 4 à 12 et **en ce que** les débits du second et du premier liquides sont respectivement dans un rapport de l'ordre de 0,5 à 0,1.

## Claims

1. A membrane exchange device, notably an electrodialysis device, having at least two compartments in which:
e) each compartment defines a circuit for a given liquid and comprises a stack of membranes (12, 17) and of separator frames (7, 8),
f) each separator frame (7, 8) consists of a rigid element, called gasket plane (9, 19) comprising a central part which is hollowed (10) and lined with an openwork structure (11, 20),
g) all the gasket planes (9, 19) of the separator frames (7, 8) and all the membranes (12, 17) of a given circuit are pierced with the same flow orifices (13, 14, 23, 24) which, in the stack, form the feed and evacuation conduits for the corresponding liquid,
h) all the gasket planes (9, 19) of the separator frames (7, 8) of a given circuit are provided with the same distribution channels (15, 25) connecting the flow orifices to the hollowed central part,
**characterized in that** the thickness of the gasket planes of a given compartment is thicker than that of the gasket planes of the other compartment(s), and **in that** the through cross-section of the distribution channels of said given compartment is larger than that of the distribution channels of the other compartment(s).

2. The device according to claim 1, **characterized in that** the thickness of the gasket planes (9, 19), the through cross-section of the distribution channels (15, 25) and optionally the aperture of the openwork structure, for each compartment, are determined so that the head loss at the membranes (12, 17) due to the circulation of liquid is substantially the same in each compartment.

3. The device according to either of claims 1 or 2 with two compartments, **characterized in that** the ratio of the thicknesses of the gasket planes (9, 19) of the second and of the first compartment is in the order of 2 to 5.

4. The device according to claim 3, **characterized in that** the gasket planes (19) of the second compartment have a thickness in the order of 2.1 mm, and the gasket planes (9) of the first compartment have a thickness in the order of 0.6 mm.

5. The device according to any of claims 1 to 4, **characterized in that** the thickest gasket planes are formed by the stacking of gasket planes of smallest thickness, for example three gasket planes whose central gasket plane is devoid of distribution channels.

6. The device according to claim 5, **characterized in that**, in the stack, the central gasket plane is lined with welded mesh whilst the two outer gasket planes are lined with non-welded mesh added to the hollowed central part.

7. The device according to either of claims 1 or 2, **characterized in that** the thicknesses of the gasket planes of the second and first compartments lie in a ratio of 1.2 to 2, and **in that** the openwork structure of the gasket planes of the second compartment is wider than in the gasket planes of the first compartment.

8. Use of the device according to any of claims 1 to 7 for the treatment of at least two liquids at different flow rates.

9. Use of the device according to any of claims 1 to 7 for the treatment of at least two liquids of different viscosities.

10. Use according to claim 8 for the treatment by electrodialysis of a second and of a first liquid, the second liquid having greater electric conductivity than the first liquid and the flow rate of the second liquid in the second circuit being slower than that of the first liquid in the first circuit.

11. Use according to claim 10, **characterized in that** the ratio of the electric conductivities of the second and of the first liquid is in the order of 4 to 12, and **in that** the ratio of the flow rates of the second and of the first liquid is 0.5 to 0.1 respectively.

## Patentansprüche

1. Vorrichtung zum Austausch über eine Membran, insbesondere Elektrodialysator, mit wenigstens zwei Kammern, wobei:
a) jede Kammer einen Kreis für eine gegebene Flüssigkeit definiert und einen Stapel von Membranen (12, 17) und Trennrahmen (7, 8) umfaßt,
b) jeder Trennrahmen (7, 8) aus einem als Dichtungsebene (9, 19) bezeichneten starren Teil besteht, das einen mittleren Teil aufweist, der ausgespart (10) und mit einer durchbrochenen Struktur (11, 20) versehen ist,
c) alle Dichtungsebenen (9, 19) der Trennrahmen (7, 8) sowie alle Membranen (12, 17) eines gegebenen Kreises mit den gleichen Strömungsöffnungen (13, 14, 23, 24) versehen sind, die in dem Stapel Leitungen zum Zuführen und Abführen der entsprechenden Flüssigkeit bilden,
d) alle Dichtungsebenen (9, 19) der Trennrahmen (7, 8) eines gegebenen Kreises mit den gleichen Verteilungskanälen (15, 25), welche die Strömungsöffnungen mit dem ausgesparten mittleren Teil verbinden, versehen sind,
**dadurch gekennzeichnet, daß** die Dichtungsebenen einer gegebenen Kammer eine größere Dicke als die Dichtungsebenen der anderen Kammer(n) aufweisen und daß der Durchlaßquerschnitt der Verteilungskanäle der gegebenen Kammer größer als der der Verteilungskanäle der anderen Kammer(n) ist.

2. Vorrichtung nach Anspruch 1, **dadurch gekennzeichnet, daß** die Dicke der Dichtungsebenen (9, 19), der Durchlaßquerschnitt der Verteilungskanäle (15, 25) und eventuell die Öffnung der durchbrochenen Struktur für jede Kammer derart festgelegt sind, daß der durch die Zirkulation der Flüssigkeit bedingte Druckverlust im Bereich der Membranen (12, 17) in jeder Kammer im wesentlichen der gleiche ist.

3. Vorrichtung nach einem der Ansprüche 1 oder 2, mit zwei Kammern, **dadurch gekennzeichnet, daß** die Dicken der Dichtungsebenen (9, 19) der zweiten und der ersten Kammer in einem Verhältnis in der Größenordnung von 2 zu 5 liegen.

4. Vorrichtung nach Anspruch 3, **dadurch gekennzeichnet, daß** die Dichtungsebenen (19) der zweiten Kammer eine Dicke in der Größenordnung von 2,1 mm und die Dichtungsebenen (9) der ersten Kammer eine Dicke in der Größenordnung von 0,6 mm aufweisen.

5. Vorrichtung nach einem der Ansprüche 1 bis 4, **dadurch gekennzeichnet, daß** die eine größere Dicke aufweisenden Dichtungsebenen durch das Übereinanderlegen von Dichtungsebenen geringerer Dicke, beispielsweise drei Dichtungsebenen, von denen die mittlere Dichtungsebene keine Verteilungskanäle aufweist, gebildet sind.

6. Vorrichtung nach Anspruch 5, **dadurch gekennzeichnet, daß** bei der Aufschichtung die mittlere Dichtungsebene mit einem angeschweißten Tuch versehen ist, während die beiden äußeren Dichtungsebenen mit einem nicht angeschweißten, in den ausgesparten mittleren Teil eingesetzten Tuch versehen sind.

7. Vorrichtung nach einem der Ansprüche 1 oder 2, **dadurch gekennzeichnet, daß** die Dicken der Dichtungsebenen der zweiten und der ersten Kammer in einem Verhältnis von 1,2 zu 2 sind und daß die durchbrochene Struktur der Dichtungsebenen der zweiten Kammer offener ist als die der Dichtungsebenen der ersten Kammer.

8. Verwendung der Vorrichtung nach einem der Ansprüche 1 bis 7 für die Behandlung von wenigstens zwei Flüssigkeiten mit unterschiedlichen Durchsätzen.

9. Verwendung der Vorrichtung nach einem der Ansprüche 1 bis 7 für die Behandlung von wenigstens zwei Flüssigkeiten mit unterschiedlichen Viskositäten.

10. Verwendung nach Anspruch 8 für die Behandlung einer zweiten und einer ersten Flüssigkeit mittels Elektrodialyse, wobei die zweite Flüssigkeit eine größere elektrische Leitfähigkeit als die erste Flüssigkeit aufweist und der Durchsatz der zweiten Flüssigkeit in dem zweiten Kreis geringer als der der ersten Flüssigkeit in dem ersten Kreis ist.

11. Verwendung nach Anspruch 10, **dadurch gekennzeichnet, daß** die elektrischen Leitfähigkeiten der zweiten und der ersten Flüssigkeit in einem Verhältnis in der Größenordnung von 4 zu 12 liegen und daß die Durchsätze der zweiten und der ersten Flüssigkeit jeweils in einem Verhältnis in der Größenordnung von 0,5 zu 0,1 liegen.
